(19) Europäisches Patentamt / European Patent Office / Office européen des brevets

(11) **EP 2 776 179 B1**

(12) # EUROPÄISCHE PATENTSCHRIFT

(45) Veröffentlichungstag und Bekanntmachung des Hinweises auf die Patenterteilung:
**01.07.2015 Patentblatt 2015/27**

(21) Anmeldenummer: **12756706.3**

(22) Anmeldetag: **06.09.2012**

(51) Int Cl.:
***B21B 35/14*** ^(2006.01)

(86) Internationale Anmeldenummer:
**PCT/EP2012/067382**

(87) Internationale Veröffentlichungsnummer:
**WO 2013/068148 (16.05.2013 Gazette 2013/20)**

(54) **WALZWERKSANTRIEB MIT EINER ZAHNGELENKSPINDEL**

ROLLING MILL DRIVE COMPRISING A TOOTHED ARTICULATED SPINDLE

ENTRAÎNEMENT DE LAMINOIR MUNI D'UNE BROCHE D'ARTICULATION DENTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.11.2011 DE 102011086094**

(43) Veröffentlichungstag der Anmeldung:
**17.09.2014 Patentblatt 2014/38**

(73) Patentinhaber: **SMS Siemag AG**
**40237 Düsseldorf (DE)**

(72) Erfinder:
• **GRIMMEL, Rüdiger**
**57250 Netphen (DE)**

• **LAZZARO, Klaus**
**57399 Kirchhundem (DE)**

(74) Vertreter: **Klüppel, Walter**
**Hemmerich & Kollegen**
**Patentanwälte**
**Hammerstraße 2**
**57072 Siegen (DE)**

(56) Entgegenhaltungen:
**EP-A2- 0 865 837    US-A- 2 845 781**
**US-A- 3 298 198**

**Beschreibung**

Technisches Gebiet

Die vorliegende Erfindung betrifft einen Walzwerksantrieb mit einer Zahngelenkspindel, welche sich zwischen einem in einer walzenseitigen Verzahnungskammer angeordneten Zahngelenk und einem in einer getriebeseitigen Verzahnungskammer angeordneten Zahngelenk erstreckt.

Stand der Technik

Beim Walzen von Bändern in einem Walzwerk kann es erforderlich sein, beispielsweise zur Korrektur auftretender Planheitsfehler des Walzgutes die Arbeitswalzen im Walzgerüst um bestimmte Stellbereiche axial zu verschieben. Zum Abarbeiten bestimmter Walzprogramme ist es notwendig, die Breite des Walzspaltes entsprechend der Walzprogramme einzustellen.

Die Arbeitswalzen des Walzgerüstes werden dabei typischerweise über Zahngelenkspindeln angetrieben, welche ihrerseits über ein Getriebe und entsprechend angeflanschte Motoren in Drehung versetzt werden.

Um die oben genannte axiale Verschiebung der Arbeitswalzen um exakt vorgegebene Beträge im Walzgerüst zu erreichen, ist ein Stellantrieb vorgesehen. Der rotatorische Antrieb der Arbeitswalzen erfolgt in bekannter Weise über Zahngelenkspindeln, welche zwischen den antreibbaren Arbeitswalzen und den antreibenden Getriebeeinheiten mit Antriebsmotoren in Verbindung stehen. Die Zahngelenkspindeln sind dabei so ausgebildet, dass sie einerseits die axiale und Die Arbeitswalzen des Walzgerüstes werden dabei typischerweise über Zahngelenkspindeln angetrieben, welche ihrerseits über ein Getriebe und entsprechend angeflanschte Motoren in Drehung versetzt werden.

Um die oben genannte axiale Verschiebung der Arbeitswalzen um exakt vorgegebene Beträge im Walzgerüst zu erreichen, ist ein Stellantrieb vorgesehen. Der rotatorische Antrieb der Arbeitswalzen erfolgt in bekannter Weise über Zahngelenkspindeln, welche zwischen den antreibbaren Arbeitswalzen und den antreibenden Getriebeeinheiten mit Antriebsmotoren in Verbindung stehen. Die Zahngelenkspindeln sind dabei so ausgebildet, dass sie einerseits die axiale und höhenbedingte Verlagerung der Arbeitswalzen im Walzgerüst ausgleichen und andererseits die volle Antriebsleistung auf die Arbeitswalzen übertragen können.

Es ist bekannt, dass die dabei miteinander zusammenwirkenden Kupplungstreffer in den jeweiligen Zahnhülsen hohen Reibungskräften unterliegen und entsprechend mit einer hohen Temperaturentwicklung belastet sind. Zur Verringerung der Gleitreibung und zum Abführen der anfallenden Reibungswärme werden diese Bereiche entsprechend ständig mit einem Schmiermedium versorgt. Hierzu kann beispielsweise eine Ölumlaufschmierung vorgesehen sein, welche einerseits eine einwandfreie Versorgung aller Schmierstellen der Zahngelenke mit Schmiermedium sicherstellt, und darüber hinaus auch für die notwendige Abführung der Reibungswärme sorgt.

Die Druckschriften US 3,298,198 A und US 2,845,781 A beschreiben eine Kupplung als Verbindung zwischen zwei Wellen zum Antreiben von beispielsweise Walzen in einer Walzanlage. Der Oberbegriff von Anspruch 1 basiert auf der US 2, 845, 781 A.

Aus der EP 0 324 168 A2 ist ein Walzwerksantrieb mit Bogenzahn-Gelenkspindel bekannt, wobei die Gelenkspindel in den jeweiligen Kupplungshülsen mittels Stützelementen und axial verstellbaren Druckstößeln geführt wird.

Aus der EP 0 865 837 A2 ist ein Walzwerksantrieb mit Zahngelenkspindeln und einer Vorrichtung zur Umlaufschmierung bekannt.

Störungen, zum Beispiel durch ein Abrutschen der Zahngelenkspindel aus einer Zahnhülse.

Garstellung der Erfindung

Entsprechend ist es eine Aufgabe der vorliegenden Erfindung, einen Walzwerksantrieb anzugeben, welcher eine erhöhte Zuverlässigkeit aufweist.

Diese Aufgabe wird mittels eines Walzwerksantriebs mit den Merkmalen des Anspruchs 1 gelöst. Vorteilhafte Weiterbildungen ergeben sich aus den Unteransprüchen.

Entsprechend ist der Walzwerksantrieb mit einer sich zwischen einem in einer walzenseitigen Verzahnungskammer angeordneten Zahngelenk und einem in einer getriebeseitigen Verzahnungskammer angeordneten Zahngelenk erstreckenden, axial verschiebbaren Zahngelenkspindel versehen, wobei mindestens eine der Verzahnungskammern mit einem Schmiermedium befüllt ist. Erfindungsgemäß spannt das Schmiermedium die Zahngelenkspindel mit einer zur Walzenseite gerichteten Axial kraft vor.

Dadurch, dass mittels des Schmiermediums die Zahngelenkspindel mit einer zur Walzenseite hin gerichteten Axialkraft vorgespannt wird, kann die Zuverlässigkeit des Walzwerksantriebs weiter erhöht werden. Insbesondere kann auf diese Weise auf das Bereitstellen von Federn zum Beaufschlagen der Zahngelenkspindel mit einer Axialkraft in Richtung der Walzenseite verzichtet werden. Entsprechend kann auch auf die aus dem Stand der Technik bekannten Druckfedern verzichtet werden.

Die Nachführung der Zahngelenkspindel in axialer Richtung wird darüber hinaus durch die erfindungsgemäße Lösung vereinfacht, da mittels des Schmiermediums stets ein konstanter Anpressdruck der Zahngelenkspindel in die walzenseitige Verzahnungskammer erreicht werden kann. Eine Federkennkurve oder eine Hysterese, wie sie bei konventionellen Federn auftritt, ist entsprechend nicht vorhanden.

Bevorzugt weist die Zahngelenkspindel eine erste in der walzenseitigen Verzahnungskammer angeordnete Druckfläche und eine zweite in der getriebeseitigen Verzahnungskammer angeordnete Druckfläche auf, wobei die erste und/oder die zweite Druckfläche mit dem Schmiermedium beaufschlagt ist.

Durch das Ausbilden der ersten und zweiten Druckfläche an der Zahngelenkspindel kann über die jeweilige Auslegung der ersten und zweiten Druckfläche die entsprechende, zur Walzenseite hin gerichtete Axialkraft erreicht werden. Durch eine entsprechende Dimensionierung kann selbst bei gleichem Schmierstoffdruck in den jeweiligen Verzahnungskammern, nämlich der getriebeseitigen Verzahnungskammer und der walzenseitigen Verzahnungskammer, dennoch eine zur Walzenseite hin gerichtete Axialkraft auf die Zahngelenkspindel aufgebracht werden.

In einer bevorzugten Ausgestaltung ist die erste Druckfläche kleiner als die zweite Druckfläche. Durch die genannte Ausbildung der ersten Druckfläche derart, dass sie auf der Walzenseite kleiner ist als die zweite Druckfläche auf der Getriebeseite, kann bei in beiden Verzahnungskammern vorliegendem gleichen Schmiermediendruck eine Axialkraft in Richtung zur Walzenseite auf die Zahngelenkspindel aufgebracht werden.

In einer Variante oder Ergänzung ist der Druck des Schmiermediums in der walzenseitigen Verzahnungskammer kleiner als der Druck des Schmiermediums in der getriebeseitigen Verzahnungskammer.

Dadurch, dass der Schmiermediendruck in der walzenseitigen Verzahnungskammer geringer ist, als in der getriebeseitigen Verzahnungskammer, kann auch bei identischen ersten und zweiten Druckflächen, nämlich den Druckflächen auf der Getriebeseite und auf der Walzenseite, die Ausbildung einer zur Walzenseite hin gerichteten Axialkraft erreicht werden.

Bevorzugt ist zumindest die getriebeseitige Verzahnungskammer druckdicht bezüglich des darin enthaltenen Schmiermediums abgedichtet. Bevorzugt sind hier sowohl die getriebeseitige Verzahnungskammer als auch die walzenseitige Verzahnungskammer druckdicht bezüglich des Schmiermediums abgedichtet. Auf diese Weise kann zum einen erreicht werden, dass durch die des jeweiligen Druckes in den Verzahnungskammern eine gerichtete Axialkraftkomponente auf die Zahngelenkspindel derart beaufschlagt wird, dass die Zahngelenkspindel zur Walzenseite hin gedrängt wird. Zum anderen kann erreicht werden, dass der Ölkreislauf vollständig geschlossen ist.

Auf das bisher sehr verschmutzungsanfällige Verfahren der ölumlaufgeschmierten Spindeln, welche mit einer großen Ölfanghaube realisiert wurden, kann nun verzichtet werden. Durch den geschlossenen Schmiermedienkreislauf werden darüber hinaus die Verschmutzungsgefahr der Umgebung sowie die Umweltverträglichkeit der Anlage weiter verbessert.

In einer vorteilhaften Weiterbildung ist mindestens ein getriebeseitiger Schmiermedienkreislauf zur Versorgung der getriebeseitigen Verzahnungskammer mit Schmiermedium, und mindestens ein walzenseitiger Schmiermedienkreislauf zur Versorgung der walzenseitigen Verzahnungskammer mit Schmiermedium vorgesehen.

Durch das Vorsehen der zwei unterschiedlichen Schmiermedienkreisläufe kann die entsprechende Druckverteilung in den Verzahnungskammern erreicht werden und gleichzeitig kann eine zufriedenstellende Kühlung der jeweiligen Reibungsstellen erreicht werden.

Bevorzugt ist der Druck im getriebeseitigen Schmiermedienkreislauf höher als der Druck im walzenseitigen Schmiermedienkreislauf. In einer vorteilhaften Weiterbildung verlaufen der getriebeseitige Schmiermedienkreislauf und/oder der walzenseitige Schmiermedienkreislauf zumindest teilweise in der Zahngelenkspindel. Dies ermöglicht eine gute Kühlung der Zahngelenkspindel und eine kompakte Bauweise.

Weiter bevorzugt ist an der Zahngelenkspindel eine Drehdurchführung zur Versorgung mindestens eines Schmiermedienkreislaufs mit Schmiermedium vorgesehen. In einer Weiterbildung ist eine Drehdurchführung an der Getriebehülse zur Versorgung mindestens eines Schmiermedienkreislaufs mit Schmiermedium vorgesehen.

Das Bereitstellen einer Drehdurchführung und der jeweilige Schmiermedienzulauf und -ablauf zu den beiden Verzahnungskammern, wobei Zulauf und Ablauf in der Zahngelenkspindel vorgesehen ist, ist bevorzugt aus Sicht der Montage der Zahngelenkspindel, da lediglich zwei Ölanschlüsse jeweils an der Drehdurchführung vorgesehen sein müssen.

In der genannten Variante, in der die Drehdurchführung auf der Getriebewelle aufgebracht ist und der Ölzulauf und Ölablauf durch die Getriebewelle vorgenommen wird, kann auf eine Drehdurchführung auf der Zahngelenkspindel verzichtet werden. Es ergeben sich jedoch relativ aufwändige Bohrarbeiten für die Getriebewelle.

In einer weiteren bevorzugten Ausgestaltung verbleibt das Schmiermedium stationär in mindestens einer Verzahnungskammer.

Durch die genannte Variante, dass das Schmiermedium einmalig in die jeweiligen Verzahnungskammern eingebracht wird und stationär in dieser verbleibt, kann die Axialkraft durch das einmalige Einbringen des Schmiermediums unter einem bestimmten Druck definiert eingestellt werden und es kann auf aufwändige Zu- und Rückleitungen verzichtet werden. Ein schleichender Druckverlust kann hier jedoch zum Verlust der Anpasskraft führen. Weiterhin ist kein umlaufendes Öl mehr vorgesehen, so dass eine Kühlwirkung nicht gegeben ist.

In einer Weiterbildung ist die getriebeseitige Verzahnungskammer so ausgebildet, dass sie die axiale Verschiebbarkeit der Zahngelenkspindel ermöglicht.

Durch die entsprechende Ausbildung der Verzahnungskammer auf der Getriebeseite derart, dass sie eine axiale Verschiebung der Zahngelenkspindel gegenüber der Verzahnungskammer ermöglicht, kann ein zuverlässiges Anpressen der Zahngelenkspindel auf der Walzenseite erreicht werden, da etwaige Axialverschiebungen der Walzen bzw. Anpassungen des Walzspaltes durch die axiale Verschiebbarkeit der Zahngelenkspindel aufgefangen werden können.

Mit Vorteil ist eine Schmiermittelumlaufschmierung für das Schmiermedium vorgesehen. Auf diese Weise kann eine entsprechend gute Kühlung erreicht werden.

Kurze Beschreibung der Figur

Bevorzugte weitere Ausführungsformen und Aspekte der vorliegenden Erfindung werden durch die nachfolgende Beschreibung der Figur näher erläutert.
Dabei zeigt:

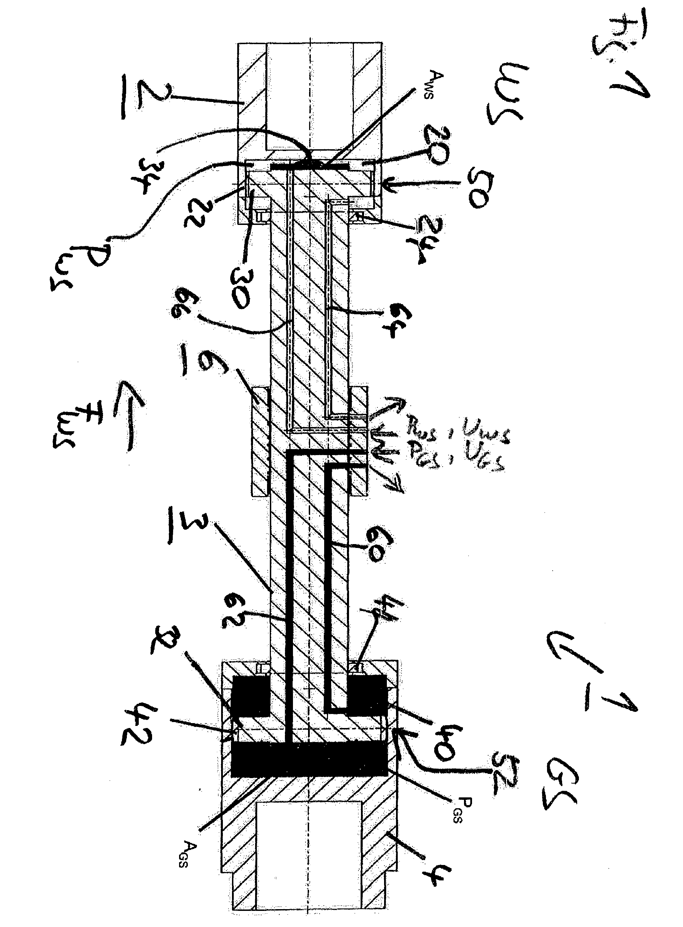

Figur 1     eine mögliche Ausführung eines Walzwerksantriebs gemäß der vorliegenden Erfindung in einer exemplarischen Schnittdarstellung.

Detaillierte Beschreibung der bevorzugten Ausführungsbeispiele

Im Folgenden werden bevorzugte Ausführungsbeispiele anhand der Figur beschrieben.
Figur 1 zeigt entsprechend einen Walzwerksantrieb 1 mit einer Walzenseite WS, auf welcher die hier nicht gezeigten Arbeitswalzen eines Walzgerüsts angeordnet sind, und mit einer Getriebeseite GS, auf welcher das hier nicht gezeigte Antriebsgetriebe sowie die Antriebsmotoren zur Rotation des Getriebes und damit der Antriebswalzen angeordnet ist. Die Getriebeseite GS ist mit der Walzenseite WS über eine Zahngelenkspindel 3 verbunden.
Auf der Walzenseite WS ist eine Walzenhülse 2 vorgesehen, in welcher die entsprechenden balligverzahnten Treffer 30 der Zahngelenkspindel 3 mit der walzenseitigen Teilnutverzahnung 22 ein walzenseitiges Zahngelenk 50 ausbilden. Auf der Getriebeseite GS ist eine Getriebehülse 4 vorgesehen, in welcher die entsprechenden balligverzahnten Treffer 32 der Zahngelenkspindel 3 mit einer getriebeseitigen Teilnutverzahnung 42 ein getriebeseitiges Zahngelenk 52 ausbilden. Auf diese Weise wird eine drehfeste Verbindung zwischen der Getriebeseite GS und der Walzenseite WS erreicht, so dass das vom Getriebe bzw. vom Antriebsmotor eingetragene Antriebsmoment auf die Arbeitswalzen übertragen werden kann.
In der Walzenhülse 2 ist die Teilnutverzahnung 22 in einer entsprechenden walzenseitigen Verzahnungskammer 20 angeordnet. In dieser Verzahnungskammer 20 sind auch die an der Zahngelenkspindel 3 ausgebildeten balligverzahnten Treffer 30 aufgenommen. Entsprechend ist das walzenseitige Zahngelenk 50 in der walzenseitigen Verzahnungskammer 20 aufgenommen. Die Verzahnungskammer 20 ist mittels einer Dichtung 24 gegenüber der Zahngelenkspindel 3 abgedichtet und stellt so eine druckdichte Kammer für ein in der Verzahnungskammer 20 aufgenommenes Schmiermedium, beispielsweise ein Schmieröl, bereit.
Auch auf der Getriebeseite GS ist die getriebeseitige Teilnutverzahnung 42 der Getriebehülse 4 in einer entsprechenden getriebeseitigen Verzahnungskammer 40 aufgenommen. In dieser Verzahnungskammer 40 sind die an der Zahngelenkspindel 3 angeordneten balligverzahnten Treffer 32 aufgenommen. Entsprechend ist das getriebeseitige Zahngelenk 52 in der getriebeseitigen Verzahnungskammer 40 aufgenommen. Mittels einer Dichtung 44 ist diese getriebeseitige Verzahnungskammer 40 auch am Durchtritt der Zahngelenkspindel 3 abgedichtet, so dass sich eine für ein in der getriebeseitige Verzahnungskammer 40 aufgenommenes Schmiermedium druckdichte Kammer ergibt.
Die Zahngelenkspindel 3 ist axial verschiebbar, insbesondere dadurch, dass getriebeseitige Teilnutverzahnung 42 mit einer relativ großen Tragweite ausgebildet ist, welche eine Axialverschiebung der balligverzahnten Treffer 32 in einem gewissen Rahmen erlaubt. Die axiale Verschiebbarkeit ist von Bedeutung, wenn die Arbeitswalzen zur Feinjustage eines bestimmten Walzvorganges ebenfalls axial verschoben werden müssen, und/oder wenn der Walzspalt in dem jeweiligen Walzgerüst eingestellt wird. Durch die axiale Veschiebbarkeit der Zahngelenkspindel kann der sich ergebende unterschiedliche axiale Abstand zwischen der Walzenhülse 2 und der Getriebehülse 4 entsprechend ausgeglichen werden.
Um einen einwandfreien Betrieb des Walzwerksantriebs 1 zu gewährleisten, wird die Zahngelenkspindel 3 bevorzugt derart mit einer Axialkraft $F_{WS}$ beaufschlagt, dass das die Zahngelenkspindel 3 im Zahngelenk 50 in der walzenseitigen Verzahnungskammer 20 stets in Richtung der Walzenseite WS mit einer Kraft beaufschlagt ist. In dem in Figur 1 gezeigten Ausführungsbeispiel ist die Zahngelenkspindel 3 diesbezüglich mit einem entsprechenden walzenseitigen Anschlag 34 versehen, welcher dazu ausgelegt ist, im Betrieb ständig in Kontakt mit der Stirnwand der Verzahnungskammer 20 zu stehen.
Eine Beaufschlagung der Zahngelenkspindel 3 mit der Axialkraft $F_{WS}$ ist über unterschiedliche Mechanismen möglich. Gemäß der vorliegenden Erfindung wird diese Beaufschlagung der Zahngelenkspindel 3 mit der Axialkraft $F_{WS}$ durch das Schmiermedium erreicht.
In dem in Figur 1 gezeigten Ausführungsbeispiel ist zum einen eine effektive Druckfläche $A_{WS}$ auf der Walzenseite WS der Zahngelenkspindel 3 vorgesehen, welche senkrecht zur Achse der Zahngelenkspindel 3 ausgebildet ist und auf der Stirnseite der Zahngelenkspindel 3 ausgebildet ist. Eine effektive Druckfläche $A_{GS}$ ist auch auf der Getriebeseite GS an der Stirnfläche der Zahngelenkspindel 3 ausgebildet. In der Figur 1 ist die walzenseitige Druckfläche $A_{WS}$ im Wesentlichen gleich groß wie die getriebeseitige Druckfläche $A_{GS}$. Entsprechend muss zur Ausbildung einer axialen, zur Walzenseite WS hin gerichteten Kraft $F_{WS}$ der Druck $P_{GS}$ des Schmiermediums in der getriebeseitigen Verzahnungskammer 40 höher sein, als der Druck $P_{WS}$ des Schmiermediums in der walzenseitigen Verzahnungskammer 20. Durch den Druckunterschied wird entsprechend eine Vorspannung der Zahngelenkspindel 3 in Richtung der Walzenseite WS erreicht.

In einer vorteilhaften Variante, welche in der Figur 1 nicht explizit gezeigt ist, ist die effektive walzenseitige Druckfläche $A_{WS}$ kleiner als die effektive getriebeseitige Druckfläche $A_{GS}$. Auf diese Weise kann erreicht werden, dass bei einer Beaufschlagung der beiden Verzahnungskammern 20, 40 mit einem identischen Druck bereits eine Axialkraft $F_{WS}$ in Richtung der Walzenseite WS erzeugt werden, welche die Zahngelenkspindel 3 in Richtung der Walzenseite WS vorspannt.

Eine Kombination dieser Ausgestaltung, nämlich entsprechend angepasste Druckflächen $A_{WS}$, $A_{GS}$ in Verbindung mit dem entsprechend in den Verzahnungskammern 20, 40 anliegenden Schmiermitteldrücken $P_{WS}$, $P_{GS}$ führt ebenfalls zur Walzenseite hin gerichteten Axialkraft $F_{WS}$, mittels welcher die Zahngelenkspindel 3 in Richtung der Walzenseite WS vorgespannt wird.

Das Schmiermedium, bevorzugt ein Schmieröl, wird in dem in Figur 1 gezeigten Ausführungsbeispiel über eine Drehzuführung 6 auf in der Zahngelenkspindel 3 vorgesehene Schmiermedienzuführungen 62, 66, sowie Schmiermedienrückläufe 60, 64 zugeführt. Hierbei dient eine Bohrung in der Zahngelenkspindel 3 als Schmiermedienzulauf 62 zu der getriebeseitigen Verzahnungskammer 40 und eine Bohrung als Schmiermedienrücklauf 60 aus der getriebeseitigen Verzahnungskammer 40. Auf diese Weise kann hier ein Schmiermittelkreislauf bereitgestellt werden, welcher mit einem entsprechenden Druck $P_{GS}$ sowie einem entsprechenden Volumen $V_{GS}$ und einen entsprechenden Zeitvolumen die getriebeseitige Verzahnungskammer 40 durchfließt. Der Druck $P_{GS}$ ist dabei so gewählt, dass die gewünschte Axialkraft $F_{WS}$ erreicht wird. Das Volumen $V_{GS}$ ist so gewählt, dass durch die Zirkulation des entsprechenden Schmiermedienvolumens die erforderliche Kühlung des Zahngelenks 52 bzw. der im Zahngelenk 52 vorgesehenen Bestandteile erreicht wird.

Analog hierzu sind Bohrungen in der Zahngelenkspindel 3 als walzenseitiger Schmiermedienzulauf 66 sowie als Schmiermedienrücklauf 64 vorgesehen. Der Druck $P_{WS}$ und das Volumen $V_{WS}$ werden dabei so eingestellt, dass in der walzenseitigen Verzahnungskammer 20 ebenfalls ein Druck $P_{WS}$ herrscht, welcher so bemessen ist, dass er in Kombination mit dem Druck $P_{GS}$ des Schmiermediums in der Verzahnungskammer 40 die axial gerichtete Kraft $F_{WS}$ erzeugt. Mit anderen Worten ist der Druck $P_{WS}$ auf der Walzenseite WS typischer Weise kleiner als der Druck $P_{GS}$ auf der Getriebeseite GS. Weiterhin ist auch hier das Schmiermedium dazu vorgesehen, eine Kühlung des Zahngelenks 50 bzw. der an diesem Zahngelenk 50 beteiligten Komponenten auf der Walzenseite WS zu kühlen.

Eine besonders bevorzugte Kühlung kann dadurch erreicht werden, dass das Schmiermedium auf der einen Seite des Zahngelenks 50, 52 zugeführt wird, und auf der jeweils anderen Seite des Zahngelenks 50, 52 wieder aus der jeweiligen Verzahnungskammer 20, 40 herausgeleitet wird. Entsprechend durchspült das Schmiermedium die entsprechenden Komponenten bzw. die Verzahnung in den Zahngelenken 50, 52, wodurch zum einen eine hervorragende Schmierung und zum anderen ein Abtransport von Wärme über alle beteiligten Oberflächen hinweg erreicht werden kann.

Die Dichtungen 24, 44 sind jeweils so ausgelegt, dass die jeweiligen Verzahnungskammern 20, 40 für das jeweilige Schmiermedium druckdicht abgeschlossen sind.

Auch die Drehdurchführung 6 ist so ausgebildet, dass die einzelnen Zuläufe und Rückläufe 60, 62, 64, 66 ebenfalls druckdicht gegeneinander abgedichtet sind, so dass mehrere, druckdicht zueinander abgedichtete Schmiermedienräume entstehen.

Über die entsprechenden Schmierstoffzuläufe und Schmierstoffrückläufe 60, 62, 64, 66 kann darüber hinaus sichergestellt werden, dass die Kraft $F_{WS}$, welche axial auf die Zahngelenkspindel 3 ausgeübt wird, im Wesentlichen gleich bleibt, unabhängig von dem jeweiligen Verschiebezustand in der Verzahnungskammer 40. Wenn die Differenz der Drücke in der getriebeseitigen Verzahnungskammer 40 und der walzenseitigen Verzahnungskammer 20 konstant gehalten wird, bleibt auch die Vorspannung bzw. die Axialkraft $F_{WS}$ im Wesentlichen konstant.

Über das Verhältnis der jeweiligen Drücke $P_{WS}$, $P_{GS}$ zu den jeweiligen Druckflächen $A_{WS}$, $A_{GS}$ in den jeweiligen Verzahnungskammern 20, 40 kann durch die geregelte Druckeinstellung entsprechend eine Kraftdifferenz zwischen der walzenseitigen Verzahnungskammer 20 und der getriebeseitigen Verzahnungskammer 40 eingestellt werden. Entsprechend wird es auf diese Weise möglich, die zur Walze hin zeigende Axialkraft $F_{WS}$ derart einzustellen, dass die Zahngelenkspindel 3 stets mit einer definierten axialen Kraft gegen die walzenseitige Hülse 2 gedrückt wird und auch bei einer axialen Bewegung der Arbeitswalze nicht vom Zapfen abrutschen kann.

Als Auslegungskriterium kann auch die Ungleichung

$$\frac{P_{GS}}{A_{GS}} < \frac{P_{WS}}{A_{WS}}$$

herangezogen werden.

Wesentlich hierbei ist, dass die resultierende Kraft $F_{WS}$ so ausgebildet ist, dass ein zuverlässiges Anpressen der Zahngelenkspindel 3 im Bereich des Zahngelenks 50 auf der Walzenseite an der walzenseitigen Hülse 2 erreicht wird.

In alternativen Ausführungsbeispielen, die hier ebenfalls erwogen werden, sind neben der oben genannten Drehdurchführung 6, welche vier Schmiermedienanschlüsse benötigt, auch Drehdurchführungen geeignet, welche lediglich zwei Schmiermedienanschlüsse aufweisen, wenn die Druckflächen $A_{WS}$ und $A_{GS}$ unterschiedlich groß sind. Entsprechend kann bei gleichen Drücken $P_{GS}$ und $P_{WS}$ dennoch eine resultierende Axialkraft erreicht werden. Eine einfache Drehdurchführung kann auf diese Weise erreicht werden.

In einer weiteren Variante wird die Schmiermedienzuführung und Schmiermedienrückführung über die Getriebewelle, also insbesondere über die Getriebehülse 4, erreicht. Entsprechend muss in dieser -hier nicht gezeigten - Variante keine Drehdurchführung auf die Zahngelenkspindel 3 montiert werden. In der Getriebehülse 4 jedoch müssen relativ aufwändige Bohrungen eingebracht werden.

In einer weiteren Ausführungsform werden die entsprechenden Verzahnungskammern 20, 40 einmalig mit einem Schmierstoff befüllt, wobei hier entweder unterschiedliche Drücke $P_{WS}$ und $P_{GS}$ eingefüllt werden können, und/oder die jeweiligen Druckflächen $A_{WS}$ und $A_{GS}$ entsprechend angepasst werden, um die Axialkraft $F_{WS}$ in Richtung der Walzenseite bereitzustellen. Diese letztere Variante hat zwar den Vorteil, dass keine kontinuierliche Schmierstoffzuführung notwendig ist, es kann jedoch zu einem schleichenden Druckverlust kommen, wenn dennoch Schmierstoff austritt. Weiterhin fällt die Kühlwirkung des umlaufenden Öls fort.

Bezugszeichenliste

1   Walzwerksantrieb
2   Walzenhülse
20   walzenseitige Verzahnungskammer
22   walzenseitige Teilnutverzahnung
24   Dichtung
3   Zahngelenkspindel
30   balligverzahnte Treffer auf Walzenseite
32   balligverzahnte Treffer auf Getriebeseite
34   Anschlag
4   Getriebehülse
40   getriebeseitige Verzahnungskammer
42   getriebeseitige Teilnutverzahnung
44   Dichtung
50   walzenseitiges Zahngelenk
52   getriebeseitiges Zahngelenk
6   Drehdurchführung für Schmiermedium
60   Schmiermedienrücklauf Getriebeseite
62   Schmiermedienzulauf Getriebeseite
64   Schmiermedienrücklauf Walzenseite
66   Schmiermedienzulauf Walzenseite

$A_{WS}$   walzenseitige Druckfläche
$A_{GS}$   getriebeseitige Druckfläche
$P_{WS}$   walzenseitiger Schmiermitteldruck
$P_{GB}$   getriebeseitiger Schmiermitteldruck
$V_{WS}$   walzenseitiges Schmiermittelvolumen
$V_{GS}$   getriebeseitiges Schmiermittelvolumen

$F_{WS}$   zur Walzenseite hin gerichtete Axialkraft

WS   Walzenseite
GS   Getriebeseite

**Patentansprüche**

1.   Walzwerksantrieb (1) mit einer sich zwischen einem in einer walzenseitigen Verzahnungskammer (20) angeordneten Zahngelenk (50) und einem in einer getriebeseitigen Verzahnungskammer (40) angeordneten Zahngelenk (52) erstreckenden, axial verschiebbaren Zahngelenkspindel (3), wobei mindestens eine der Verzahnungskammern (20, 40) mit einem Schmiermedium befüllt ist,
**dadurch gekennzeichnet, dass**
das Schmiermedium die Zahngelenkspindel (3) mit einer zur Walzenseite (WS) gerichteten Axialkraft ($F_{WS}$) vorspannt.

2.   Walzwerksantrieb (1) gemäß Anspruch 1, wobei die Zahngelenkspindel (3) eine erste in der walzenseitigen Verzahnungskammer (20) angeordnete Druckfläche ($A_{WS}$) und eine zweite in der getriebeseitigen Verzahnungskammer (40) angeordnete Druckfläche ($A_{GS}$) aufweist, wobei die erste und/oder die zweite Druckfläche ($A_{WS}$, $A_{GS}$) mit dem Schmiermedium beaufschlagt ist.

3.   Walzwerksantrieb (1) gemäß Anspruch 2, wobei die erste Druckfläche ($A_{WS}$) kleiner als die zweite Druckfläche ($A_{GS}$) ist.

4.   Walzwerksantrieb (1) gemäß einem der vorstehenden Ansprüche, wobei der Druck ($P_{WS}$) des Schmiermediums in der walzenseitigen Verzahnungskammer (20) kleiner als der Druck ($P_{GS}$) des Schmiermediums in der getriebeseitigen Verzahnungskammer (40) ist.

5.   Walzwerksantrieb (1) gemäß einem der vorstehenden Ansprüche, wobei zumindest die getriebeseitige Verzahnungskammer (40) für das Schmiermedium druckdicht ausgebildet ist.

6.   Walzwerksantrieb (1) gemäß einem der vorstehenden Ansprüche, wobei mindestens ein getriebeseitiger Schmiermedienkreislauf (60, 62) zur Versorgung der getriebeseitigen Verzahnungskammer (40) mit Schmiermedium, und mindestens ein walzenseitiger Schmiermedienkreislauf (64, 66) zur Versorgung der walzenseitigen Verzahnungskammer (20) mit Schmiermedium vorgesehen sind.

7. Walzwerksantrieb (1) gemäß Anspruch 6, wobei der Druck ($P_{GS}$) im getriebeseitigen Schmiermedienkreislauf (60, 62) höher als der Druck ($P_{WS}$) im walzenseitigen Schmiermedienkreislauf (64, 66) ist.

8. Walzwerksantrieb (1) gemäß Anspruch 6 oder 7, wobei der getriebeseitige Schmiermedienkreislauf (60, 62) und/oder der walzenseitige Schmiermedienkreislauf (64, 66) zumindest teilweise in der Zahngelenkspindel (3) verlaufen.

9. Walzwerksantrieb (1) gemäß Anspruch 8, wobei an der Zahngelenkspindel (3) eine Drehdurchführung (6) zur Versorgung mindestens eines Schmiermedienkreislaufs (60, 62; 64, 66) mit Schmiermedium vorgesehen ist.

10. Walzwerksantrieb (1) gemäß Anspruch 8 oder 9, wobei eine Drehdurchführung (6) an der Getriebehülse (4) zur Versorgung mindestens eines Schmiermedienkreislaufs (60, 62; 64, 66) mit Schmiermedium vorgesehen ist.

11. Walzwerksantrieb (1) gemäß einem der vorstehenden Ansprüche, wobei das Schmiermedium stationär in mindestens einer Verzahnungskammer (20, 40) verbleibt.

12. Walzwerksantrieb (1) gemäß einem der vorstehenden Ansprüche, wobei die getriebeseitige Verzahnungskammer (40) so ausgebildet ist, dass sie die axiale Verschiebbarkeit der Zahngelenkspindel (3) ermöglicht.

13. Walzwerksantrieb (1) gemäß einem der vorstehenden Ansprüche, wobei eine Schmiermittelumlaufschmierung für das Schmiermedium vorgesehen ist.


**Claims**

1. Rolling mill drive (1) with a axially displaceable toothed articulated spindle (3) extending between a toothed joint (50) arranged in an interlock chamber (20) at the roll side and a toothed joint arranged in an interlock chamber (40) at the transmission side, wherein at least one of the interlock chambers (20, 40) is filled with a lubricant, **characterised in that** the lubricant biases the toothed articulated spindle (3) by an axial force ($F_{WS}$) directed towards the roll side (WS).

2. Rolling mill drive (1) according to claim 1, wherein the toothed articulated spindle (3) has a first pressure surface ($A_{WS}$) arranged in the interlock chamber (20) at the roll side and a second pressure surface ($A_{GS}$) arranged in the interlock chamber (40) at the transmission side, wherein the first and/or second pressure surface ($A_{WS}$, $A_{GS}$) is or are acted on the by the lubricant.

3. Rolling mill drive (1) according to claim 2, wherein the first pressure surface ($A_{WS}$) is smaller than the second pressure surface ($A_{GS}$).

4. Rolling mill drive (1) according to any one of the preceding claims, wherein the pressure ($P_{WS}$) of the lubricant in the interlock chamber (20) at the roll side is smaller than the pressure ($P_{GS}$) of the lubricant in the interlock chamber (40) at the transmission side.

5. Rolling mill drive (1) according to any one of the preceding claims, wherein at least the interlock chamber (40) at the transmission side is constructed to be pressure-tight for the lubricant.

6. Rolling mill drive (1) according to any one of the preceding claims, wherein at least one lubricant circuit (60, 62), which is at the transmission side, is provided for supply of the interlock chamber (40) at the transmission side with lubricant and at least one lubricant circuit (64, 66), which is at the roll side, is provided for supply of the interlock chamber (20) at the roll side with lubricant.

7. Rolling mill drive (1) according to claim 6, wherein the pressure ($P_{GS}$) in the lubricant circuit (60, 62) at the transmission side is higher than the pressure ($P_{WS}$) in the lubricant circuit (64, 66) at the roll side.

8. Rolling mill drive (1) according to claim 6 or 7, wherein the lubricant circuit (60, 62) at the transmission side and/or the lubricant circuit (64, 66) at the roll side extends or extend at least partly in the toothed articulated spindle (3).

9. Rolling mill drive (1) according to claim 8, wherein a rotary feedthrough (6) for supply of at least one lubricant circuit (60, 62; 64, 66) with lubricant is provided at the toothed articulated spindle (3).

10. Rolling mill drive (1) according to claim 8 or 9, wherein a rotary feedthrough (6) is provided at the transmission sleeve (4) for supply of at least one lubricant circuit (60, 62; 64, 66) with lubricant.

11. Rolling mill drive (1) according to any one of the preceding claims, wherein the lubricant remains stationary in at least one interlock chamber (20, 40).

12. Rolling mill drive (1) according to any one of the preceding claims, wherein the interlock chamber (40) at the transmission side is so constructed that it enables axial displaceability of the toothed articulated spindle (3).

**13.** Rolling mill drive (1) according to any one of the preceding claims, wherein a circulatory lubrication by the lubricant is provided.

**Revendications**

**1.** Commande de laminoir (1) comprenant une broche d'articulation à dents (3) à déplacement axial s'étendant entre une articulation à dents (50) disposée dans une chambre d'engrenage (20) côté cylindre et une articulation à dents (52) disposée dans une chambre d'engrenage (40) côté entraînement, dans laquelle au moins une des chambres d'engrenage (20, 40) est remplie avec un milieu lubrifiant, **caractérisée en ce que** le milieu lubrifiant met la broche d'articulation à dents (3) en état de précontrainte avec une force axiale (Fws) dirigée vers le côté cylindre (WS).

**2.** Commande de laminoir (1) selon la revendication 1, dans laquelle la broche d'articulation à dents (3) présente une première surface de pression ($A_{WS}$) disposée dans la chambre d'engrenage (20) côté cylindre et une deuxième surface de pression ($A_{GS}$) disposée dans la chambre d'engrenage (40) côté entraînement, dans laquelle la première et/ou la deuxième surface de pression (Aws, $A_{GS}$) sont sollicitées avec le milieu lubrifiant.

**3.** Commande de laminoir (1) selon la revendication 2, dans laquelle la première surface de pression (Aws) est plus petite que la deuxième surface de pression ($A_{GS}$).

**4.** Commande de laminoir (1) selon l'une quelconque des revendications précédentes, dans laquelle la pression (Pws) du milieu lubrifiant dans la chambre d'engrenage (20) côté cylindre est inférieure à la pression ($P_{GS}$) du milieu lubrifiant dans la chambre d'engrenage (40) côté entraînement.

**5.** Commande de laminoir (1) selon l'une quelconque des revendications précédentes, dans laquelle au moins la chambre d'engrenage (40) côté entraînement est réalisée de manière étanche à la pression pour le milieu lubrifiant.

**6.** Commande de laminoir (1) selon l'une quelconque des revendications précédentes, dans laquelle on prévoit au moins un circuit de milieux lubrifiants (60, 62) côté entraînement pour l'alimentation de la chambre d'engrenage (40) côté entraînement avec un milieu lubrifiant et au moins un circuit de milieux lubrifiants (64, 66) côté cylindre pour l'alimentation de la chambre d'engrenage (20) côté cylindre avec un milieu lubrifiant.

**7.** Commande de laminoir (1) selon la revendication 6, dans laquelle la pression ($P_{GS}$) régnant dans le circuit de milieux lubrifiants (60, 62) côté entraînement est supérieure à la pression (Pws) régnant dans le circuit de milieux lubrifiants (64, 66) côté cylindre.

**8.** Commande de laminoir (1) selon la revendication 6 ou 7, dans laquelle le circuit de milieux lubrifiants (60, 62) côté entraînement et/ou le circuit de milieux lubrifiants (64, 66) côté cylindre s'étendent au moins en partie la dans broche d'articulation à dents (3).

**9.** Commande de laminoir (1) selon la revendication 8, dans laquelle on prévoit contre la broche d'articulation à dents (3), un passage rotatif (6) pour l'alimentation d'au moins un circuit de milieux lubrifiants (60, 62 ; 64, 66) avec un milieu lubrifiant.

**10.** Commande de laminoir (1) selon la revendication 8 ou 9, dans laquelle on prévoit contre la douille d'engrenage (4), un passage rotatif (6) pour l'alimentation d'au moins un circuit de milieux lubrifiants (60, 62 ; 64, 66) avec un milieu lubrifiant.

**11.** Commande de laminoir (1) selon l'une quelconque des revendications précédentes, dans laquelle le milieu lubrifiant reste stationnaire dans au moins une des chambres d'engrenage (20, 40).

**12.** Commande de laminoir (1) selon l'une quelconque des revendications précédentes, dans laquelle la chambre d'engrenage (40) côté entraînement est réalisée de telle sorte qu'elle permet le déplacement axial de la broche d'articulation à dents (3).

**13.** Commande de laminoir (1) selon l'une quelconque des revendications précédentes, dans laquelle on prévoit une lubrification périphérique de lubrifiant pour le milieu lubrifiant.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3298198 A
- US 2845781 A
- EP 0324168 A2
- EP 0865837 A2